# EUROPÄISCHE PATENTSCHRIFT

(11) **EP 1 637 414 B1**
(45) Veröffentlichungstag und Bekanntmachung des Hinweises auf die Patenterteilung: **09.07.2008**
(21) Anmeldenummer: 05025124.8
(22) Anmeldetag: 28.03.2003
(51) Int. Cl.: B60R 22/405, B60R 22/46

(54) **Leistungsstraffer**
High performance tightener
Pre-tentionneur performant

(30) Priorität: 28.03.2002 DE 10213906
(43) Veröffentlichungstag der Anmeldung: 22.03.2006
(62) Teilanmeldung aus: 03745286.9
(73) Patentinhaber: AUTOLIV DEVELOPMENT AB, 447 83 Vargarda (SE)
(72) Erfinder: Löffler, Kay, 25469 Halstenbek (DE); Pech, Michael, 22529 Hamburg (DE); Schmidt, Martin, 25337 Elmshorn (DE); Schmidt, Thomas, 23669 Timmendorfer Strand (DE); Schneider, Thomas, 25813 Husum (DE); Suhr, Stefan, 25336 Elmshorn (DE); Bösch, Stefan, 21644 Revenahe (DE)
(74) Vertreter: Müller, Karl-Ernst

(56) Entgegenhaltungen:
- EP-A- 0 093 233
- DE-A- 4 331 027
- DE-A- 19 528 115
- DE-A- 19 602 549
- DE-A1- 19 907 962

## Beschreibung

Die Erfindung betrifft einen selbstsperrenden Gurtaufroller mit einem Gehäuse, mit einer wenigstens ein fahrzeugsensitiv und/oder gurtbandsensitiv in eine gehäuseseitige Blockierverzahnung einsteurbares Blockiermittel aufweisenden Blockiereinrichtung für die Gurtwelle und mit einer auf die Gurtwelle einwirkenden Strammvorrichtung bestehend aus einem über eine Antriebsvorrichtung in Drehung zu versetzenden Antriebsrad, das bei Auslösung der Strammvorrichtung mit der Gurtwelle koppelbar ist, wobei das Antriebsrad der Strammvorrichtung über die Blockiereinrichtung für die Gurtwelle kraftübertragend mit der Gurtwelle verbindbar ist und das Antriebsrad vor Auslösung der Strammvorrichtung kraftübertragend an dem Gehäuse des Gurtaufrollers festgelegt ist.

Ein selbstsperrender Gurtaufroller mit den vorgenannten Merkmalen ist in der EP 0 093 233 beschrieben. Als Antriebsrad ist ein von einem eingeleiteten Gasstrom beaufschlagter Drehflügel vorgesehen, der mit einem am Gurtaufrollergehäuse drehbar angeordneten Ring verbunden ist. An dem Ring sind einerseits schwenkbare Riegel angeordnet, die in Eingriff mit einem mit der Gurtwelle des Gurtaufrollers fest verbundenen, außen verzahnten Klinkenrad einsteuerbar sind, so dass bei Auslösung der Strammvorrichtung der drehbare Ring über die in Eingriff mit dem Klinkenrad eingesteuerten Riegel die Gurtwelle antreibt. Gleichzeitig ist der Ring Bestandteil eines drehbar angeordneten Gehäuses, und dieses Gehäuse ist über eine in Gurtauszugsrichtung wirkende Rücklaufsperre in Form von an dem Gehäuse angreifenden Sperrklinken bei Normalbetrieb des Gurtaufrollers ohne Auslösung der Strammvorrichtung gehäusefest festgelegt. Zum beim Ansprechen des gurtbandsensitiven und/oder fahrzeugsensitiven Steuersystems herbeizuführenden Blockieren der Gurtwelle in Gurtauszugsrichtung sind die zwischen Ring und Klinkenrad wirkenden Riegel an eine Steuerscheibe als Teil des gurtbandsensitiven/fahrzeugsensitiven Steuersystems gekoppelt, so dass bei Ansprechen des Steuersystems die am Ring gelagerten Riegel in Eingriff mit dem Klinkenrad gesteuert werden. Hierdurch ist die Gurtwelle in ihrer Drehbewegung blockiert, wobei eine auf die Gurtwelle in Gurtauszugsrichtung wirkende Last über die Gurtwelle, das Klinkenrad, die Riegel und den Ring mit Gehäuse in das tragende Gehäuse des Gurtaufrollers abgeleitet wird.

Somit ist bei dem gattungsgemäßen Gurtaufroller das Prinzip verwirklicht, dass die ohnehin vorhandene fahrzeugsensitiv und/oder gurtbandsensitiv angesteuerte Blockiereinrichtung für die Gurtwelle nun in einer zusätzlichen Funktion auch für die Kupplung des Antriebsrades der Strammvorrichtung an die Gurtwelle für den Strammvorgang herangezogen ist.

Der Erfindung liegt die Aufgabe zugrunde, bei einem Gurtaufroller mit den gattungsgemäßen Merkmalen das Funktionsprinzip weiter zu verbessern.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass ein von der Strammvorrichtung ausgelöstes Ansteuerelement zur Ankopplung des Blockiermittels der Blockiereinrichtung für die Gurtwelle an das Antriebsrad vorgesehen ist. Somit wird über das über die Strammvorrichtung ausgelöste gesonderte Ansteuerelement in gleicher Weise wie für die Gurtblockierung das Blockiermittel mit dem Antriebsrad gekoppelt, so dass eine lastübertragende Verbindung zwischen dem Antriebsrad und der Gurtwelle besteht und über diese lastübertragende Verbindung dann auch die Strammbewegung von dem Strammerantrieb auf die Gurtwelle übertragen wird. Hiermit ist der Vorteil verbunden, dass nach der hergestellten Kopplung das Ansteuerelement während des Strammvorganges unbelastet ist, weil wie im Blockierfall die Lastübertragung unmittelbar zwischen Antriebsrad und Gurtwelle gegeben ist. Soweit im Stand der Technik üblicherweise zwischen dem Antriebsrad und der Gurtwelle eine während des gesamten Strammvorganges kraftübertragende Kupplung erforderlich ist, ist erfindungsgemäß eine derartige Kupplung nunmehr vermieden.

Hinsichtlich der Ausbildung der Sensorik kann in an sich bekannter Weise vorgesehen sein, daß zur gurtbandsensitiven Steuerung des Blockiermittels eine die Blockiereinrichtung umgreifende Trägheitsmasse vorgesehen ist, deren Relativbewegung bezüglich der Drehbewegung der Blockiereinrichtung das Blockiermittel in Eingriff mit dem Antriebsrad aussteuert, wobei der Trägheitsmasse eine Außenverzahnung als Blockierverzahnung zugeordnet sein kann, mit welcher während des Normalbetriebs des Gurtaufrollers der Sensorhebel eines fahrzeugsensitiven Sensors in Eingriff bringbar ist. Bleibt also die Trägheitsmasse aufgrund eines zu schnellen Gurtbandauszuges in ihrer Drehbewegung hinter der Drehung der Gurtwelle zurück oder wird die Trägheitsmasse in ihrer Drehbewegung durch den fahrzeugsensitiven Sensor angehalten, so wird die sich einstellende Relativbewegung zwischen Trägheitsmasse und Gurtwelle in die Aussteuerung der am Profilkopf gelagerten Sperrklinke in Eingriff mit der Innenverzahnung des Antriebsrades umgesetzt, wodurch die lastübertragende Verbindung zwischen Gurtwelle und Antriebsrad hergestellt ist.

Soweit die Gurtwelle und das Antriebsrad über die Aussteuerung der am Profilkopf belagerten Sperrklinken miteinander zu koppeln sind, sind unterschiedliche Ausführungsbeispiele für die Ansteuerung der Sperrklinken über eine zusätzlich in die Außenverzahnung der Trägheitsmasse einsteuerbare Kupplungsklinke vorgesehen, die dann die entsprechende Relativbewegung der Trägheitsmasse gegenüber der Gurtwelle einleitet.

Nach einer ersten Ausführungform der Erfindung ist vorgesehen, dass die Kupplungsklinke bei Auslösung der Strammvorrichtung mittels einer gesonderten Klinkenbetätigung in Eingriff mit der Blockierverzahnung der Trägheitsmaße einsteuerbar ist.

Hierzu kann vorgesehen sein, dass die Klinkenbetätigung als ein die Kupplungsklinke bewegender Aktuator ausgebildet ist, wobei dieser Aktuator ein Elektromagnet oder ein Piezoelement oder ein anderes geeignetes Antriebselement sein kann.

Alternativ ist vorgesehen, dass der Aktuator zur Betätigung der Kupplungsklinke eine pyrotechnisch angetriebene Kolbeneinheit ist, wobei zur Betätigung der Kolbeneinheit eine gesonderte pyrotechnische Antriebseinheit vorgesehen sein kann; alternativ ist es auch möglich die Kolbeneinheit an die pyrotechnische Antriebsvorrichtung der Strammvorrichtung anzuschließen, so dass die Kolbeneinheit zur Betätigung der Kupplungsklinke von der Antriebsvorrichtung der Strammvorrichtung beaufschlagbar ist.

Auch weitere gesonderte druckgesteuerte Antriebsmittel sind denkbar, wie hydraulische Antriebsmöglichkeiten, die Erzeugung eines Antriebsmediums mittels Abbrennens einer Sprengschnur, ferner Bowdenzugbetätigungen oder Betätigungen über ein Hebelgestänge wie auch Betätigungen über sich ausdehnende Druckkörper wie Luftblasen oder ähnliches.

In einer weiteren Ausführungsform der Erfindung, die nicht mehr auf eine die Blockiereinrichtung umgreifende Trägheitsmasse zurückgreift, ist vorgesehen, dass das Ansteuerelement ein an dem Antriebsrad gelagerter und über ein Gehäuseteil zwangsgeführter Mitnehmerhebel ist, der bei Drehung des Antriebsrades zwangsgesteuert in Eingriff mit der Blockierverzahnung einer trägheitsgesteuerten Steuerscheibe für die Blockiermittel gelangt und im Anschluss an die durch die Steuerscheibe bewirkte Verriegelung der Blockiermittel mit dem Antriebsrad außer Eingriff mit der Steuerscheibe kommt. Es ist ferner vorgesehen, dass die Steuerscheibe an der Außenseite einer das Antriebsrad umgreifenden Gehäusekappe auf einem Fortsatz der Gurtwelle angeordnet ist und in der Gehäusekappe eine Kulissenführung für die Zwangsführung des die Gehäusekappe durchgreifenden Mitnehmerhebel ausgebildet ist, wobei vorgesehen ist, dass die Kulissenführung derart ausgebildet ist, dass der Mitnehmerhebel nach Beendigung der durch die Relativdrehung der Steuerscheibe gegenüber dem Profilkopf bewirkten Aussteuerung der Blockierklinken in Eingriff mit der Innenverzahnung des Antriebsrades abgeschert wird.

Nach einem weiteren Ausführungsbeispiel der Erfindung ist vorgesehen, daß das Ansteuerelement eine an einem in die topfförmige Trägheitsmasse reichenden und mit dem Antriebsrad verbundenen Mitnehmerteil ausschwenkbar gelagerte Klinke ist, die in Eingriff mit einer an der Innenseite der topfförmigen Trägheitsmasse ausgebildeten Innenverzahnung steuerbar ist. Hierzu kann vorgesehen sein, daß die Klinke an einem an dem Mitnehmerteil gehalterten Federelement schwenkbar gelagert ist, wobei das Federelement wenigstens einen die Klinke in ihrer Ruheposition festlegenden Federarm aufweist. Der Federarm legt somit die Ansprechschwelle fest, bei welcher aufgrund der Drehung des Antriebsrades und des damit verbundenen Mitnehmerteils die Klinke in Eingriff mit der Innenverzahnung der Trägheitsmasse ausgesteuert wird, so daß die Trägheitsmasse in Drehung versetzt wird; da gleichzeitig bei Auslösung der Strammvorrichtung die Gurtwelle steht oder sich jedenfalls sehr viel langsamer dreht, kommt es zu einer Relativdrehung zwischen der Trägheitsmasse und der Gurtwelle, so daß die Blockiermittel der Blockiervorrichtung in Eingriff mit der Innenverzahnung des Antriebsrades ausgesteuert werden, so daß die unmittelbar lastübertragende Verbindung zwischen dem Antriebsrad und der Gurtwelle hergestellt ist.

Hinsichtlich der Verbindung des Antriebsrades mit der bei diesem Ausführungsbeispiel wiederum topfförmig ausgebildeten Trägheitsmasse und der daran ausgebildeten Innenverzahnung ist zur Vereinfachung der Kupplungsverbindung vorgesehen, dass das Ansteuerelement aus einem von der Antriebsvorrichtung der Strammvorrichtung zu Beginn von deren Antriebsbewegung in eine an der Innenseite der topfförmigen Trägheitsmasse ausgebildete Innenverzahnung einsteuerbares Kupplungsglied besteht, wobei das Kupplungsglied aus einem an dem Antriebsrad unter der Wirkung der Antriebsvorrichtung längsverschiebbar angeordneten Stift besteht, der durch seine Längsverschiebung in Eingriff mit der Innenverzahnung der Trägheitsmasse gelangt.

In der Zeichnung sind Ausführungsbeispiele der Erfindung wiedergegeben, welches nachstehend beschrieben sind. Es zeigen:
- Fig. 1: einen Gurtaufroller mit Strammvorrichtung in einer Gesamtansicht mit teils auseinandergezogenenen Baugruppen,
- Fig. 2: die Blockierseite des Gurtaufrollers mit integriertem Antriebsrad in einer auseinandergezogenen Darstellung,
- Fig. 3: den Gegenstand der Figur 2 aus einer anderen Blickrichtung,
- Fig. 4: das straffersensitive Steuersystem für die Ankopplung der Gurtwelle an das Antriebsrad in einer Einzeldarstellung.
- Fig. 5: einen Gehäuseschenkel des Gurtaufrollergehäuses mit Blockierklinken zur Festlegung des Antriebsrades,
- Fig. 6: eine Anordnung zur Ankopplung der Sperrklinken des Profilkopfes an das Antriebsrad in einer schematischen Darstellung,

- Fig. 7: die Anordnung gemäß Figur 6 mit einer gesonderten, pyrotechnischen Antriebseinheit,
- Fig. 8: die Anordnung gemäß Figur 6, bei der die pyrotechnische Antriebsvorrichtung der Strammvorrichtung den Antriebsimpuls für die Betätigung der Kupplungsklinke liefert,
- Fig. 9: eine andere Ausführungsform der Ankopplung der Sperrklinke des Profilkopfes an das Antriebsrad,
- Fig. 10: den Gegenstand der Figur 9 in einer geschnittenen Seitenansicht,
- Fig. 11: das Steuerungssystem für die Ankopplung der Gurtwelle an das Antriebsrad gemäß Figuren 1 bis 3 in einer anderen Ausführungsform,
- Fig. 12: die Festlegung des Antriebsrades an einem Gehäuseschenkel in einer anderen Ausführungsform in einer schematischen Darstellung,
- Fig. 13: die Festlegung des Antriebsrades an einem Gehäuseschenkel in einer weiteren Ausführungsform in einer schematischen Darstellung,
- Fig. 14a-1: in unterschiedlichen Ausführungsformen jeweils die Zuordnung von Gehäuse, Gurtwelle, Antriebsrad sowie Blockier- und Steuerelementen zueinander in einer schematischen Darstellung.

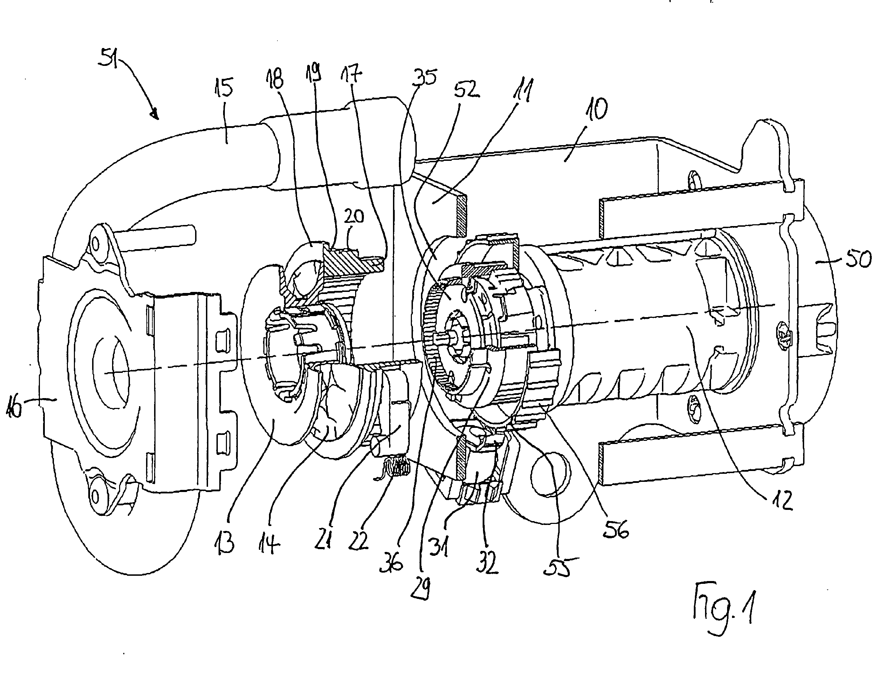

Der in Figur 1 insgesamt dargestellte Gurtaufroller hat ein U-förmiges Gehäuse 10, in dessen seitlichen U-Schenkeln eine Gurtwelle 12 drehbar gelagert ist; auf der Gurtwelle 12 ist das nicht dargestellte Gurtband des Sicherheitsgurtaufrollers aufgewickelt.

Während auf der einen Seite der Gurtwelle 12 unter einer Gehäusekappe 50 eine Aufwickelfeder angeordnet ist, ist auf der anderen Seite der Gurtwelle 12 ein Antriebsrad 13 einer Strammvorrichtung angeordnet, dem eine Antriebsvorrichtung 51 zugeordnet ist, um im Auslösefall der Strammvorrichtung das Antriebsrad 13 in Drehung zu versetzen. Die Antriebsvorrichtung 51 ist bei dem dargestellten Ausführungsbeispiel als Kugelstraffer entsprechend der DE 196 02 549 A1 ausgebildet; soweit die Antriebsvorrichtung in ihrer Ausgestaltung nicht zum Gegenstand der Erfindung zählt, wird zur Erläuterung auf die vorgenannte Druckschrift verwiesen. Auch sind andere Antriebsvorrichtungen, beispielsweise ein Antrieb über ein auf dem Antriebsrad aufgewickeltes Antriebsseil möglich. Im einzelnen umfaßt die Antriebsvorrichtung 51 ein über eine Befestigungskappe 16 an dem Gehäuse 10 befestigtes Rohrgehäuse 15, in welchem eine Treibladung sowie Kugeln als Massekörper angeordnet sind; im Auslösefall treiben die durch die Zündung des Gasgenerators entstehenden Gase die Kugeln aus dem Rohrgehäuse 15, so daß diese in Ausnehmungen 14 des Antriebsrades 13 eintreten und das Antriebsrad 13 somit in Drehung versetzen.

Das Antriebsrad 13 hat einen zu dem U-Schenkel 11 des Gehäuses 10 gerichteten Fortsatz 17, der in eine in dem U-Schenkel 11 des Gehäuses 10 ausgebildeten Lageröffnung 52 hineinragt. Dabei liegt ein an dem Fortsatz 17 ausgebildeter Lagerflansch 18 gegen die Außenseite des U-Schenkels 11 an, während ein anschließender Lagerkranz 19 in der Ebene der Lageröffnung 52 angeordnet ist, so daß das Antriebsrad 13 in dem U-Schenkel 11 des Gehäuses 10 drehbar gelagert ist.

An dem neben dem Lagerkranz 19 angeordneten und zur Gurtwelle 12 vorstehenden Bereich des Fortsatzes 17 ist eine Außenverzahnung als Blockierverzahnung 20 angeordnet, der eine an der Innenseite des U-Schenkels 11 schwenkbar angeordnete Blockierklinke 21 zugeordnet ist, die von einer Feder 22 in ihre Eingriffsstellung mit der Blockierverzahnung 20 vorgespannt ist. Dabei sind die Verzahnungen von Blockierklinke 21 und Blockierverzahnung 20 derart ausgebildet, daß eine Drehung des Antriebsrades 13 in Gurtabwickelrichtung stets blockiert und eine Drehung des Antriebsrades 13 in Gurtaufwickelrichtung durch Überratschen der Blockierklinke 21 über die Blockierverzahnung 20 ermöglicht ist. Zusätzlich weist das Antriebsrad 13 im Bereich seines Fortsatzes 17 eine Innenverzahnung 40 zum Eingriff von Blockiermitteln auf, so daß das am Gehäuse 10 über die Blockierklinke 21 festgelegte Antriebsrad 13 wie eine lastaufnehmende gehäuseseitige Verriegelung für das Blockiersystem des Gurtaufrollers wirkt. Die der Ankopplung des Antriebsrades 13 an die Gurtwelle 12 dienenden Bauteile sind nachfolgend gesondert erläutert.

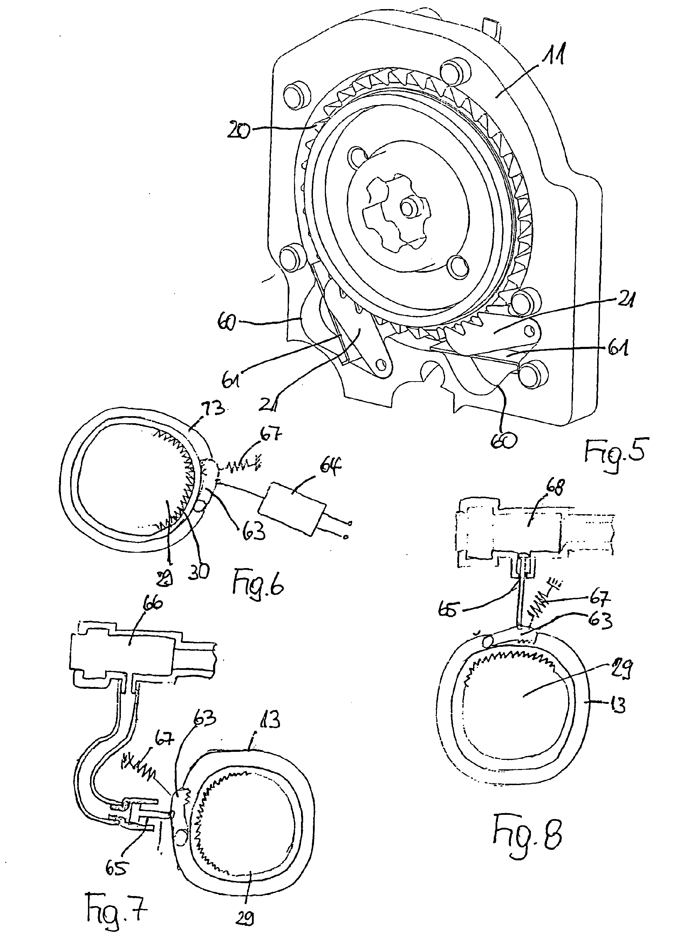

Eine alternative Anordnung der Blockierklinken 21 an dem Gehäuseschenkel 11 des Gehäuses 10 ist in Figur 5 dargestellt; bei diesem Ausführungsbeispiel sind zwei Blockierklinken 21 in der Ebene des U-Schenkels 11 des Gehäuses 10 angeordnet, und zwar in in dem Gehäuseschenkel 11 befindlichen Aussparungen 60. Die Federbelastung der Blockierklinken 21 erfolgt durch zwischen der jeweiligen Blockierklinke 21 und dem Rand der Aussparung 60 angeordnete Blattfedern 61. Wie sich unschwer ergibt, ist hiermit eine Verringerung der Baubreite des Gurtaufrollers verbunden.

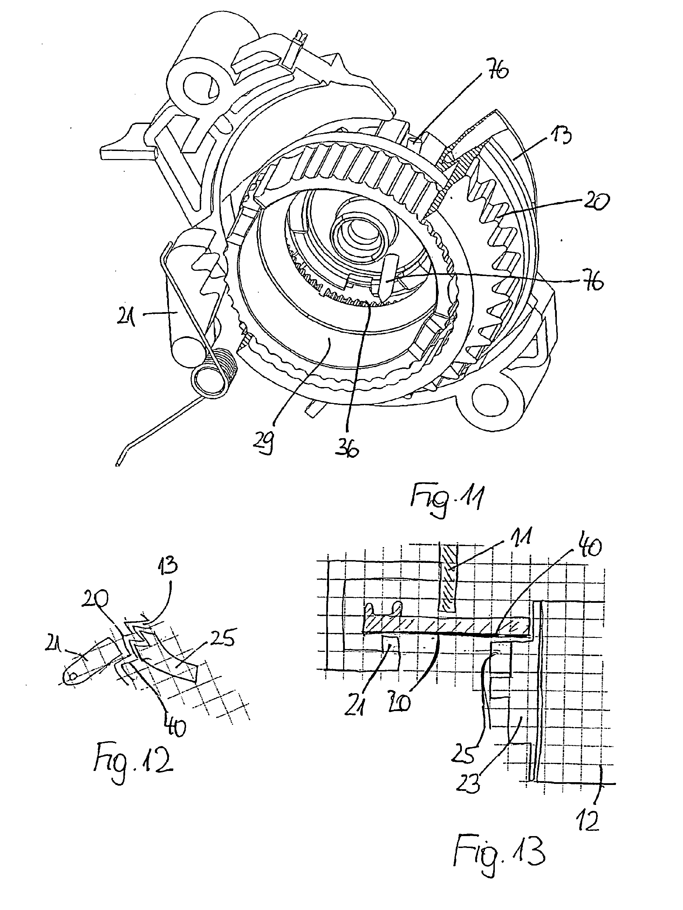

Was die Ausbildung der Verzahnungen an dem Antriebsrad zum Eingriff der Blockierklinken 21 betrifft, schlägt die Erfindung hierzu unterschiedliche Ausführungen vor. Soweit gemäß Figur 1 die Außenverzahnung 20 und die Innenverzahnung 40 in einer Ebene angeordnet sind, wird gemäß Figur 12 in zweckmäßiger Weise vorgeschlagen, diese Verzahnungen 20, 40 in einem einheitlichen Herstellungsvorgang auszubilden, indem die Außenverzahnung 20 durch das Ausprägen der Innenverzahnung 40 aus dem Ringprofil des Antriebsrades 13 gebildet wird, so daß sich eine insgesamt einheitliche Verzahnung ergibt; dies ist in Figur 12 schematisch wiedergegeben.

Eine alternative Ausführung der Verzahnung sieht eine Ausbildung der Blockierverzahnung und der notwendigen Innenverzahnung 40 als gemeinsame Innenverzahnungen 62, 40 vor, die axial nebeneinander an der Innenseite des Ringprofils des Antriebsrades 13 ausgebildet sind. In diesem Fall ist die Blockierklinke 21 U-förmig ausgebildet, so daß sie von außen bzw. von der Seite her in die Blockier-Innenverzahnung 62 eingreift.

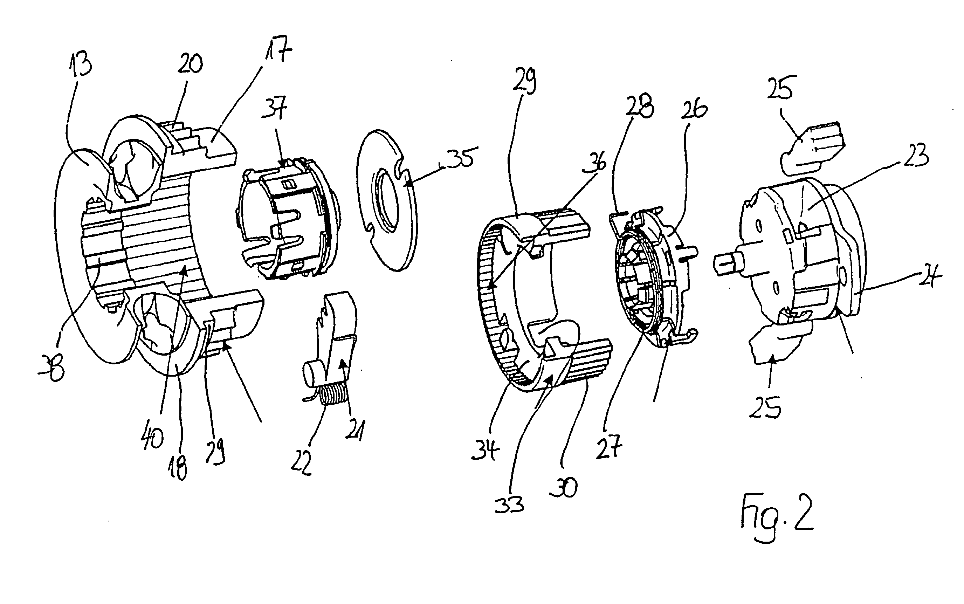

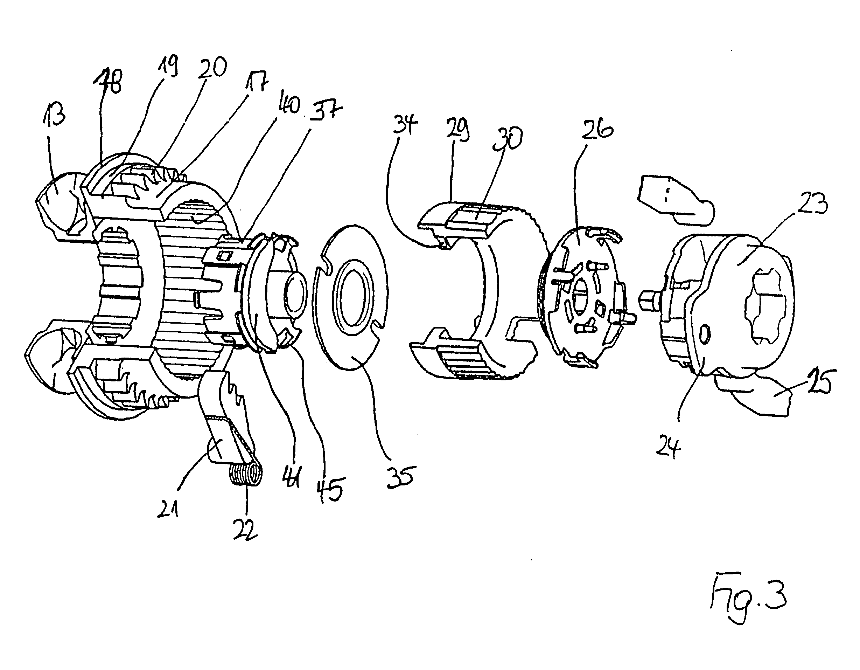

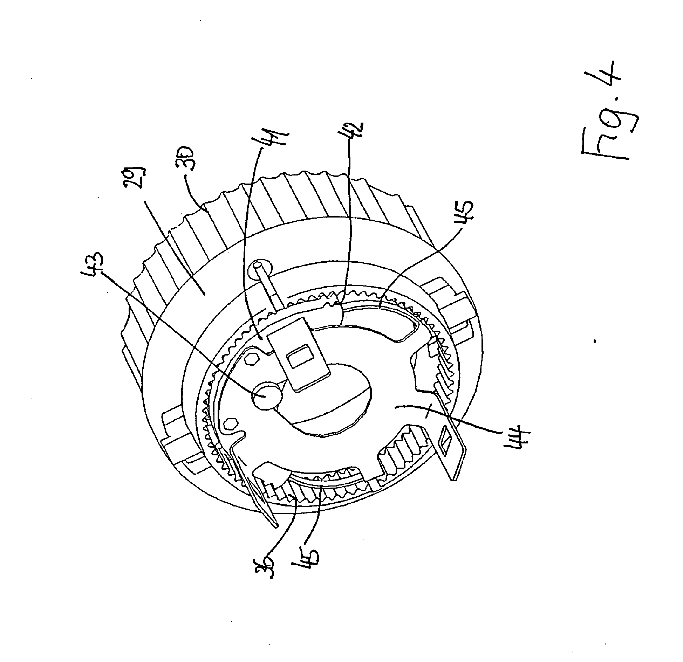

Die Ankopplung des Antriebsrades 13 an die Gurtwelle 12 wird in einem ersten Ausführungsbeispiel anhand der Figuren 2 bis 4 erläutert. Wie zunächst den Figuren 2 und 3 zu entnehmen ist, ist ein Profilkopf 23 an der zugeordneten Stirnseite der Gurtwelle befestigt, wobei wie nicht weiter dargestellt eine feste Verbindung zwischen dem Profilkopf 23 und der Gurtwelle 12 besteht, welche unmittelbar über dem Torsionsstab gebildet sein kann, so daß sich Gurtwelle 12 und Profilkopf 23 jeweils miteinander drehen.

Soweit bei Bauformen eines Gurtaufrollers mit einer als Torsionsstab ausgebildeten Kraftbegrenzungseinrichtung, beispielsweise gemäß der DE 43 31 027 A1, der Profilkopf 23 undrehbar mit dem im Inneren der Gurtwelle 12 verlaufenden Torsionsstab verbunden und insoweit eine Relativdrehung zwischen dem Profilkopf 23 und der Gurtwelle 12 möglich ist, sind an dem Profilkopf 23 radial abstehende Ansätze 24 vorgesehen, an denen nicht dargestellte, mit der Gurtwelle 12 verbundene Scherstifte angeordnet sind, so daß vor einem Ansprechen des Torsionsstabes der Profilkopf 23 unmittelbar mit der Gurtwelle 12 verbunden ist. An dem Profilkopf sind einander gegenüberliegend zwei radial ausschwenkbare Sperrklinken als Blockiermittel 25 angeordnet, über welche in einer noch zu beschreibenden Weise die Blockierung der Gurtwelle 12 gegenüber dem Gehäuse 10 erfolgt.

Soweit die Ansteuerung der Blockierung einerseits durch ein gurtbandsensitives und andererseits durch ein fahrzeugsensitives Steuersystem eingeleitet wird, besteht das gurtbandsensitive Steuersystem aus einem mit dem Profilkopf 23, vorzugsweise durch eine formschlüssige Rastverbindung zu verbindenden Adapter 26, an dem eine die Ansprechschwelle für das gurtbandsensitive Steuersystem festlegende g-Wert-Feder als sogenannte WS-Feder 27 festgelegt ist. Das äußere, radial abstehende Federende 28 ist an der Innenseite einer ringförmig ausgebildeten und den Profilkopf 23 mit Adapter 26 umschließenden Trägheitsmasse 29 eingehängt. Damit die Sperrklinken 25 des Profilkopfes 23 radial nach außen treten können, weist die Trägheitsmasse 29 jeweils gegenüberliegende Ausnehmungen 33 für den Durchtritt der Sperrklinken 25 auf.

Auf dem äußeren Umfang der Trägheitsmasse 29 ist zusätzlich ein sich mit der Trägheitsmasse 29 jeweils drehender Ring 55 angeordnet, in dessen Außenverzahnung 56 ein an einem Fahrzeugsensor 31 angeordneter Sperrarm 32 bei Ansprechen des Fahrzeugsensors eingreift und dadurch die Trägheitsmasse 29 in ihrer Bewegung festhält. Hierdurch werden die Sperrklinken 25 in die Blockierfunktion ausgelenkt. Die Trägheitsmasse 29 ist ferner auf ihrer Außenseite mit einer Außenverzahnung 30 versehen, die eine zusätzliche Blockierung der Gurtwelle 12 ermöglicht, indem die Trägheitsmasse bei ihrer seitlichen Auslenkung in der Verzahnung 40 blockiert. Es wäre deshalb alternativ möglich, den Sperrarm 32 des Fahrzeugsensors 31 gegebenenfalls auch unmittelbar an der Außenverzahnung 30 angreifen zu lassen.

Da die Trägheitsmasse 29 nicht nur als Bestandteil des fahrzeugsensitiven und des gurtbandsensitiven Steuersystems arbeitet, sondern zusätzlich noch eine Funktion hinsichtlich der Ankopplung des Antriebsrades 13 hat, ist der Innenraum der ringförmigen Trägheitsmasse 29 durch einen Innenflansch 34 abgeteilt. Gegen den Innenflansch 34 liegt dabei eine Sicherungsscheibe 35 an, die in die ringförmige Trägheitsmasse 29 eingelegt wird und mit dem Adapter 26 verrastet, so daß die Trägheitsmasse 29 unverlierbar, aber gegenüber dem Profilkopf 23 mit Adapter 26 drehbar an dem Profilkopf 23 festgelegt ist.

In ihrem axial über die Sicherungsscheibe 35 überstehenden Bereich ist die Trägheitsmasse 29 mit einer Innenverzahnung 36 versehen. In diesen mit der Innenverzahnung 36 versehenen Teil der Trägheitsmasse 29 ragt ein an dem Antriebsrad 13 über Formschlußgestaltungen 38 festgelegter Mitnehmerteil 37 hinein, wobei an dem Mitnehmerteil 37 eine Haltefeder 44 festgelegt ist. An der Haltefeder 44 ist eine zweiarmige Kupplungsklinke 41 mit einem zentral angeordneten Lagerzapfen 43 radial ausschwenkbar gelagert, die an ihrem einen äußeren Ende eine Verzahnung 42 aufweist, die zum Eingriff in die Innenverzahnung 36 der Trägheitsmasse 29 eingerichtet ist. Die Kupplungsklinke 41 ist in ihrer von den Federarmen 45 der Haltefeder 44 festgelegten Ruhestellung derart angeordnet, daß sie freigängig gegenüber der Trägheitsmasse 29 ist. Kommt es allerdings bei Ansprechen der Strammvorrichtung zu einer Drehbeschleunigung des Antriebsrades 13 und des damit verbundenen Mitnehmerteils 37, so bleibt die Kupplungsklinke 41 aufgrund ihrer Masseträgheit hinter der Drehbewegung des Mitnehmerteils 37 zurück, wobei die Kraft der Federarme 45 überwunden wird, so daß die Kupplungsklinke 41 radial bis zum Eingriff in die Innenverzahnung 36 ausschwenkt.

Beim Normalbetrieb des Gurtaufrollers mit Auf- und Abwickelbewegungen des Gurtbandes kommt es in an sich bekannter Weise aufgrund des Ansprechens des gurtbandsensitiven oder des fahrzeugsensitiven Steuersystems zu einer Relativdrehung der Trägheitsmasse 29 gegenüber dem Profilkopf 23 und damit gegenüber der Gurtwelle 12, indem entweder bei Ansprechen des fahrzeugsensitiven Steuersystems die Trägheitsmasse 29 durch Eingriff des Sperrarms 32 des Fahrzeugsensors 31 festgelegt wird, während sich die Gurtwelle 12 weiterdreht, oder indem bei einem schnellen Gurtbandauszug die Trägheitsmasse 29 aufgrund ihrer Masseträgheit gegenüber einer schnellen Drehung des Adapters 26 mit WS-Feder 27 zurückbleibt. In beiden Fällen führt die Relativbewegung zwischen Trägheitsmasse 29 und Profilkopf 23 zu einer radialen Aussteuerung der Sperrklinken 25 durch die Ausnehmungen 33 der Trägheitsmasse 29 hindurch bis zum Eingriff in die Innenverzahnung 40 des Fortsatzes 17 des Antriebsrades 13. Da das Antriebsrad 13 aufgrund des fortwährenden Eingriffs der Blockierklinke 21 in die Blockierverzahnung 20 an dem Gehäuse 10 festgelegt ist, wird die Gurtwelle 12 an einer Drehung in Gurtabwickelrichtung gehindert, und die bei weiterem Gurtbandzug auftretende Last wird über die Sperrklinken 25 und das Antriebsrad 13 in das Gurtaufrollergehäuse 10 abgeleitet. Insofern kommt dem Antriebsrad 13 eine Doppelfunktion zu, indem es auch für die Ausbildung der Gurtblockierung herangezogen ist.

Soweit der Gurtaufroller einen Torsionsstab als Kraftbegrenzungseinrichtung aufweist, führt die bei blockiertem Profilkopf 23 auf die Gurtwelle 12 weiterhin einwirkende Auszugsbelastung zu einem Abscheren der Scherstifte vom Ansatz 24 des Profilkopfes 23, so daß sich die Gurtwelle 12 über den an ihr und an dem Profilkopf 23 eingespannten Torsionsstab in einer an sich bekannten Weise gegenüber dem blockierten Profilkopf 23 bei gleichzeitiger Kraftaufnahme durch den Torsionsstab weiterdrehen kann.

Kommt es nun zu einer Auslösung der Strammvorrichtung und damit zu einer Drehung des Antriebsrades in Gurtaufwickelrichtung, so wird zunächst die Drehung des Antriebsrades 13 in Gurtaufwickelrichtung durch die in Eingriff mit der Blockierverzahnung 20 stehende Blockierklinke 21 nicht behindert, weil die Verzahnungen von Blockierverzahnung 20 und der federbelasteten Blockierklinke 21 derart aufeinander abgestimmt sind, daß sich das Antriebsrad 13 in Gurtaufwickelrichtung durch Überratschen der Blockierklinke 21 über die Blockierverzahnung 20 drehen kann.

Die Drehung des Antriebsrades 13 führt zu einem Ansprechen der über das Mitnehmerteil 37 an dem Antriebsrad 13 gelagerten Kupplungsklinke 41, die bei entsprechender Drehbeschleunigung in Eingriff mit der Innenverzahnung 36 der Trägheitsmasse 29 gesteuert wird, so daß die Trägheitsmasse 29 an die Drehung des Antriebsrades 13 gekoppelt ist. Damit kommt es zwangsläufig zu einer Relativbewegung zwischen der sich drehenden Trägheitsmasse 29 und der sich mehr oder weniger in Ruheposition befindenden Gurtwelle 12 mit Profilkopf 23, und diese Relativbewegung führt wiederum zu einem Einsteuern der Sperrklinken 25 in die Innenverzahnung 40 des Antriebsrades 13. Hierdurch erfolgt nun eine lastübertragende, unmittelbare Kopplung zwischen dem Antriebsrad 13 und dem Profilkopf 23, so daß über die Blockiereinrichtung des Gurtaufrollers gleichzeitig die Übertragung der Strammdrehung des Antriebsrades 13 in eine Drehung der Gurtwelle 12 in Gurtaufwickelrichtung vorgenommen wird.

Alternative Ausführungsformen zur Ansteuerung einer die Ankopplung des Antriebsrades 13 an die Trägheitsmasse 29 bewirkenden und damit den Kupplungseingriff der Sperrklinken 25 des Profilkopfes 23 in die Innenverzahnung 40 des Antriebsrades 13 herbeiführenden Kupplungsklinke sind in den Figuren 6 bis 8 beschrieben.

Wie sich zunächst aus Figur 6 ergibt, ist eine Kupplungsklinke 63 an dem Antriebsrad derart drehbar gelagert, daß sie in Eingriff mit der Blockierverzahnung 30 der Trägheitsmasse 29 einschwenkbar ist. Dieses Einschwenken wird über einen schematisch dargestellten Aktuator 64 ausgeführt, der beispielsweise als Elektromagnet oder als Piezoelement ausgebildet sein kann.

Wie sich in einer anderen Ausführungsform gemäß Figur 7 ergibt, kann der Aktuator auch als an der Kupplungsklinke 63 angreifende Kolbeneinheit 65 mit einer an der Kupplungsklinke 63 angreifenden Kolbenstange ausgebildet sein. Die Kolbeneinheit 65 wird von einer gesonderten pyrotechnischen Antriebseinheit 66 angesteuert, die gemeinsam mit der Strammvorrichtung auslösbar sein kann.

Bei dem in Figur 8 dargestellten Ausführungsbeispiel ist zur Ansteuerung der die Kupplungsklinke 63 beaufschlagenden Kolbeneinheit 65 die Antriebseinheit 68 für die Strammvorrichtung herangezogen, die zu diesem Zweck mittels einer Gasdruckleitung 69 mit der Kolbeneinheit 65 verbunden ist. Bei Auslösung der Antriebseinheit 68 wird nicht nur die Antriebsvorrichtung 51 der Strammvorrichtung mit Gas beaufschlagt, vielmehr wird ein Teil des erzeugten Gases abgezweigt und über die Gasdruckleitung 69 der Kolbeneinheit 65 zugeführt, so daß die Kupplungsklinke 63 entsprechend in Eingriff mit der Trägheitsmasse 29 eingesteuert wird.

Eine weitere Ausführungsform zur Ankopplung des Antriebsrades 13 an die Trägheitsmasse 29 ergibt sich aus Figur 11, wobei hier an dem Antriebsrad 13 ein längsverschiebbarer Stift 76 derart angeordnet ist, daß der Stift 76 in den Weg der Antriebskugeln der Strammvorrichtung hineinreicht und von der ersten auftreffenden Kugel längsverschoben wird und bei dieser Längsverschiebung in Eingriff mit der Innenverzahnung 36 der Trägheitsmasse 29 gelangt und somit das Antriebsrad 13 und die Trägheitsmasse 29 aneinander koppelt.

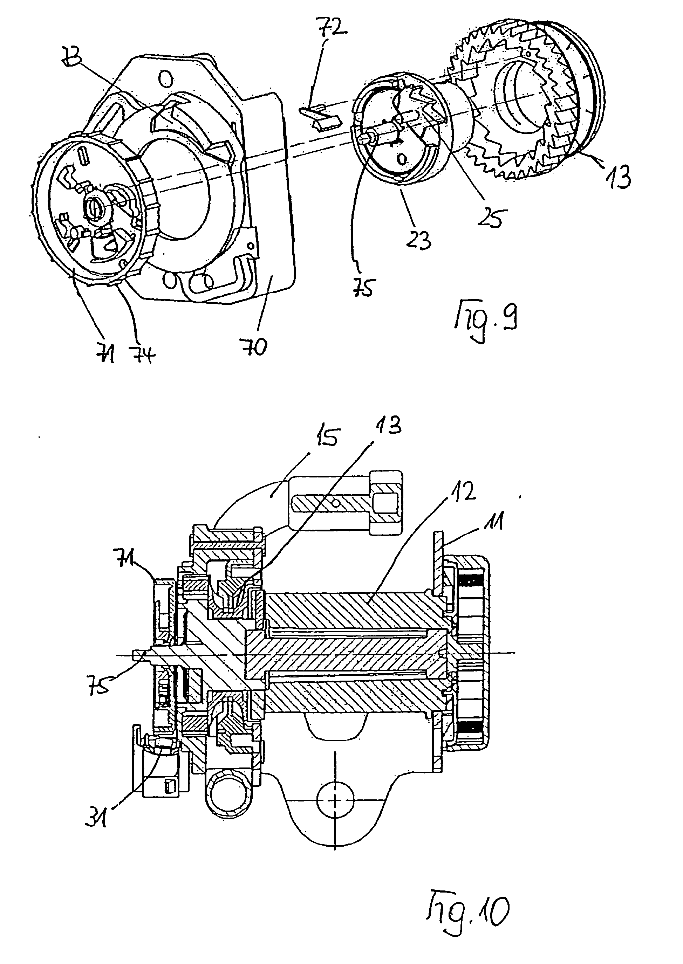

Eine wiederum alternative Ausführungsform zur Verbindung von Antriebsrad 13 und Gurtwelle 12 ist in den Figuren 9 und 10 dargestellt, wobei bei diesem Ausführungsbeispiel keine topfförmige Trägheitsmasse vorgesehen ist. Bei diesem Ausführungsbeispiel ist an dem U-Schenkel 11 des Gehäuses 10 eine U-förmige und das Antriebsrad 13 umgreifende Gehäusekappe 70 angeordnet, auf deren Außenseite eine trägheitsgesteuerte Steuerscheibe 71 auf einem hierzu durch die Gehäusekappe 70 hindurchgeführten Wellenfortsatz 75 gelagert ist. Die Steuerscheibe 71 weist auf ihrem äußeren Umfang ebenfalls eine Blockierverzahnung 74 auf, der ein fahrzeugsenstiver Sensor zugeordnet sein kann. An dem Antriebsrad 13 ist ein Mitnehmerhebel 72 schwenkbar gelagert, der durch eine in der Gehäusekappe 70 ausgebildete Kulissenführung 73 hindurchgeführt und zum Eingriff mit der Blockierverzahnung 74 der Steuerscheibe 71 eingerichtet ist. Die Kulissenführung 73 ist derart ausgebildet, daß bei beginnender Drehung des Antriebsrades 13 der Mitnehmerhebel 72 durch die feststehende Kulissenführung 73 in Eingriff mit der Blockierverzahnung 74 der Steuerscheibe 71 gebracht wird und die Steuerscheibe 71 dadurch in ihrer Drehbewegung mit der Drehung des Antriebsrades 13 mitnimmt. Hierdurch kommt es zu der Relativdrehung der Steuerscheibe 71 zu dem Profilkopf 23, was - wie beschrieben - zur Aussteuerung der Sperrklinken 25 führt. Am Ende dieses Aussteuerweges schlägt der Mitnehmerhebel 72 am Ende der Kulissenführung 73 an, so daß in dieser Stellung der Mitnehmerhebel 72 abschert und somit die Kupplung des Antriebsrades 13 an die Steuerscheibe 71 wieder aufgehoben wird; diese Kupplung ist während der Übertragung der Strammbewegung nach Eingriff der Sperrklinken 25 in die Innenverzahnung 40 des Antriebsrades 13 nicht mehr erforderlich.

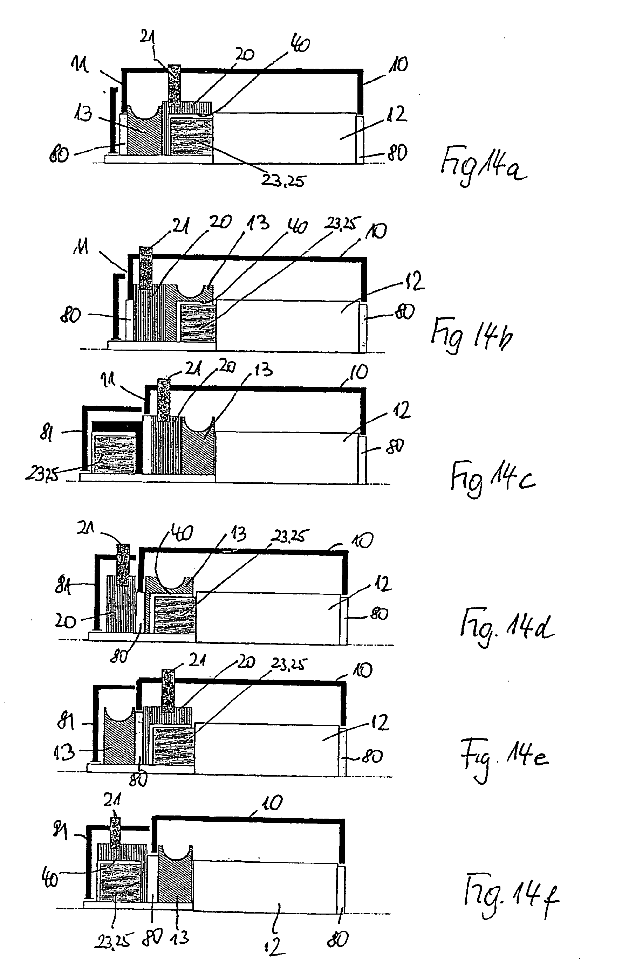

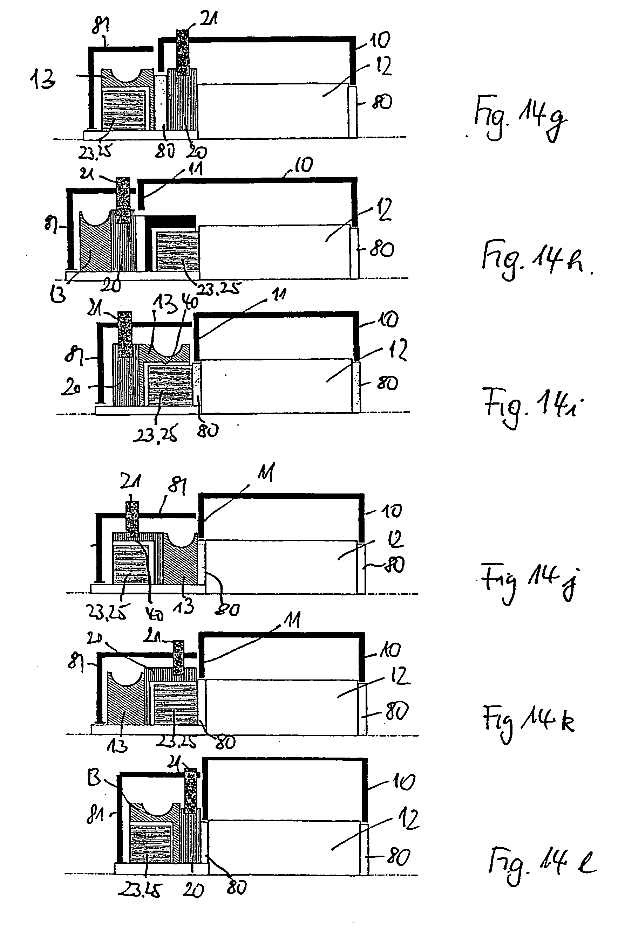

In den Figuren 14a - 1 sind unterschiedliche Möglichkeiten wiedergegeben, die konstruktiv notwendigen Bestandteile des Gurtaufrollers wie Gehäuse, Gurtwelle, Antriebsrad sowie Blockier- und Steuerelemente in einer unterschiedlichen Lage zueinander anzuordnen; daraus wird deutlich, daß die Erfindung auf alle denkbaren, konstruktiv bedingten Zuordnungen der Einzelteile eines Gurtaufrollers anwendbar und dadurch in ihrer Anwendung nicht beschränkt ist.

In Figur 14a ist zunächst eine schematische Darstellung einer Anordnung wiedergegeben, bei der das Strafferrad 13 mit einer Lagerstelle 80 für die Gurtwelle 12 in einem Gehäuseschenkel 11 des U-förmigen Gehäuses 10 innenseitig angeordnet ist, wobei die Außenverzahnung 20 zum Anschluß der gehäuseseitig gelagerten Blockierklinke 21 und die Innenverzahnung 40 zum Eingriff der Gurtblockierung (Profilkopf 23, Sperrklinken 25) zur Gurtwelle 12 hin gerichtet angeordnet sind.

Das in Figur 14b dargestellte Ausführungsbeispiel unterscheidet sich im wesentlichen dadurch, daß die Außenverzahnung 20 mit Blockierklinke 21 und die Innenverzahnung 40 mit Gurtblockierung 23, 25 auf unterschiedlichen Seiten des Antriebsrades 13 angeordnet sind, wobei das Antriebsrad mit der Innenverzahnung 40 verschachtelt angeordnet ist, um axiale Baulänge einzusparen.

Bei dem in Figur 14c dargestellten Ausführungsbeispiel ist der Aufbau des Gurtaufrollers ähnlich der Darstellung in Figur 14a, wobei das Antriebsrad 13 innenseitig benachbart der Gurtwelle 12 angeordnet und die Verzahnungen 20, 40 nach außen hin aufgebaut sind; hierbei ist ein Blockierwiderlager einbezogen.

Das in Figur 14d dargestellte Ausführungsbeispiel ist ähnlich dem in Figur 14b dargestellten Ausführungsbeispiel aufgebaut, wobei nun das Antriebsrad 13 mit Innenverzahnung 40 und die Außenverzahnung 20 mit Blockierklinke 21 auf unterschiedlichen Seiten des Gehäuseschenkels 11 angeordnet sind, wobei sich das Antriebsrad 13 innenseitig des Gehäuseschenkels 11 befindet. Ein zusätzliches Gehäuseteil 81 als Widerlager für die Sperrklinke 21 ist an dem U-Schenkel 11 des Gehäuses vorgesehen.

Das in Figur 14e dargestellte Ausführungsbeispiel zeigt im wesentlichen eine Umkehrung des in Figur 14d dargestellten Ausführungsbeispiels, wobei jetzt das Antriebsrad 13 außerhalb des Gehäuseschenkels 11 angeordnet und die in einer Ebene liegenden Verzahnungen 40, 20 des Antriebsrades 13 zwischen Gehäuseschenkel 11 und Gurtwelle 12 angeordnet sind.

Das in Figur 14f dargestellte Ausführungsbeispiel entspricht dem zu Figur 14e beschriebenen Ausführungsbeispiel, wobei eine Vertauschung der Konstruktionselemente von innerhalb nach außerhalb vorgenommen ist, indem das Antriebsrad 13 zwischen Gehäuseschenkel 11 und Gurtwelle 12 und die übrigen Elemente außerhalb des Gehäuses 10 angeordnet sind. Die Blockierklinke 21 ist entsprechend Figur 14d wiederum an einem zusätzlichen Gehäuseteile 81 abgestützt.

Das in Figur 14g dargestellte Ausführungsbeispiel entspricht dem in Figur 14e dargestellten Ausführungsbeispiel mit der Maßgabe, daß die Außenverzahnung 20 mit Blockierklinke 21 zwischen dem Gehäuseschenkel 11 und der Gurtwelle 12 angeordnet sind, während das Antriebsrad 13 mit der daran verschachtelt angeordneten Innenverzahnung 40 mit Gurtblockierung 23, 25 außerhalb des Gehäuses 10 angeordnet sind.

Bei den nachfolgend noch beschriebenen Ausführungsbeispielen gemäß Figuren 14h - 14l ist wie schon bei Figuren 14d und 14f zusätzlich zu dem bisher beschriebenen U-förmigen Gehäuse 10 an einem U-Schenkel 11 des Gehäuses ein zusätzliches Gehäuseteil 81 als Widerlager für die Sperrklinke 21 vorgesehen, so daß jeweils die Sperrklinke 21 an diesem zusätzlichen Gehäuseteil 81 gelagert ist. Hierbei stellt im weiteren das Ausführungsbeispiel gemäß Figur 14h eine Umkehrung der Anordnung gemäß Figur 14c dar, wobei die Gurtblockierung 23, 25 innerhalb des Gehäuses 10 und die übrigen Konstruktionsbestandtelle außerhalb des Gehäuses 10 angeordnet sind.

Bei dem in Figur i dargestellten Ausführungsbeispiel ist ein mit dem Ausführungsbeispiel gemäß Figur 14b identischer Aufbau der Konstruktionselemente gewählt, wobei die entsprechenden Elemente Antriebsrad 13 mit den zugehörigen Blockierungen außerhalb des Gehäuses 10 angeordnet sind.

Das in Figur 14j dargestellte Ausführungsbeispiel entspricht wiederum dem den Figur 14a dargestellten Ausführungsbeispiel mit einer seitenverkehrt vorgesehenen Anordnung der Konstruktionselemente, die sämtlich außerhalb des Gehäuses 10 angeordnet sind.

Entsprechendes gilt auch für die Ausführungsbeispiele gemäß den Figuren 14k und 14l, die analog der vorstehenden Beschreibung ebenfalls alternative Zuordnungen zeigen.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller mit einem Gehäuse (10), mit einer wenigstens ein fahrzeugsensitiv und/oder gurtbandsensitiv in eine gehäuseseitige Blockierverzahnung einsteuerbares Blockiermittel (25) aufweisenden Blockiereinrichtung für die Gurtwelle (12) und mit einer auf die Gurtwelle (12) einwirkenden Strammvorrichtung bestehend aus einem über eine Antriebsvorrichtung (51) in Drehung zu versetzenden Antriebsrad (13), das bei Auslösung der Strammvorrichtung mit der Gurtwelle (12) koppelbar ist, wobei das Antriebsrad (13) der Strammvorrichtung über die Blockiereinrichtung für die Gurtwelle (12) kraftübertragend mit der Gurtwelle (12) verbindbar ist und das Antriebsrad (13) vor Auslösung der Strammvorrichtung kraftübertragend an dem Gehäuse (10) des Gurtaufrollers festgelegt ist, **dadurch gekennzeichnet, dass** ein von der Strammvorrichtung ausgelöstes Ansteuerelement (63,72,41,76) zur Ankopplung des Blockiermittels (25) der Blockiereinrichtung für die Gurtwelle (12) an das Antriebsrad (13) vorgesehen ist.

2. Gurtaufroller nach Anspruch 1, **dadurch gekennzeichnet, dass** zur gurtbandsensitiven Steuerung des Blockiermittels (25) eine die Blockiereinrichtung umgreifende Trägheitsmasse (29) vorgesehen ist, deren Relativbewegung bezüglich der Drehbewegung der Gurtwelle (12) das Blockiermittel (25) in Eingriff mit dem Antriebsrad (13) aussteuert.

3. Gurtaufroller nach Anspruch 2, **dadurch gekennzeichnet, dass** der Trägheitsmasse (29) eine Blockierverzahnung (30) zugeordnet ist, mit welcher der Sensorhebel (31) eines fahrzeugsensitiven Sensors (30) in Eingriff bringbar ist.

4. Gurtaufroller nach einem der Ansprüche 1 bis 3, **dadurch gekennzeichnet, dass** das Ansteuerelement eine in die Blockierverzahnung (30) der Trägheitsmasse (29) einsteuerbare Kupplungsklinke (63) ist.

5. Gurtaufroller nach Anspruch 4, **dadurch gekennzeichnet, dass** die Kupplungsklinke (63) bei Auslösung der Strammvorrichtung mittels einer gesonderten Klinkenbetätigung in Eingriff mit der Blockierverzahnung (30) der Trägheitsmasse (29) einsteuerbar ist.

6. Gurtaufroller nach Anspruch 5, **dadurch gekennzeichnet, dass** die Klinkenbetätigung als ein die Kupplungsklinke (63) bewegender Aktuator (64) ausgebildet ist.

7. Gurtaufroller nach Anspruch 6, **dadurch gekennzeichnet, dass** der Aktuator (64) ein Elektromagnet ist.

8. Gurtaufroller nach Anspruch 6, **dadurch gekennzeichnet, dass** der Aktuator (64) ein Piezoelement ist.

9. Gurtaufroller nach Anspruch 6, **dadurch gekennzeichnet, dass** der Aktuator eine pyrotechnisch angetriebene Kolbeneinheit (65) ist.

10. Gurtaufroller nach Anspruch 9, **dadurch gekennzeichnet, dass** zur Betätigung der Kolbeneinheit (65) eine gesonderte auslösbare pyrotechnische Antriebseinheit (66) vorgesehen ist.

11. Gurtaufroller nach Anspruch 9, **dadurch gekennzeichnet, dass** die Kolbeneinheit (65) an die pyrotechnische Antriebsvorrichtung (68) der Strammvorrichtung angeschlossen und von dieser beaufschlagbar ist.

12. Gurtaufroller nach Anspruch 1, **dadurch gekennzeichnet, dass** das Ansteuerelement ein an dem Antriebsrad (13) gelagerter und über ein Gehäuseteil (70) zwangsgeführter Mitnehmerhebel (72) ist, der bei Drehung des Antriebsrades (13) zwangsgesteuert in Eingriff mit der Blockierverzahnung (74) einer trägheitsgesteuerten Steuerscheibe (71) für die Blockiermittel (25) gelangt und im Anschluss an die durch die Steuerscheibe (71) bewirkte Verriegelung der Blockiermittel (25) mit dem Antriebsrad (13) außer Eingriff mit der Steuerscheibe (71) kommt.

13. Gurtaufroller nach Anspruch 12, **dadurch gekennzeichnet, dass** die Steuerscheibe (71) an der Außenseite einer das Antriebsrad (13) umgreifenden Gehäusekappe (70) auf einem Fortsatz (75) der Gurtwelle angeordnet ist und in der Gehäusekappe (70) eine Kulissenführung (73) für die Zwangsführung des die Gehäusekappe (70) durchgreifenden Mitnehmerhebel (72) ausgebildet ist.

14. Gurtaufroller nach Anspruch 13, **dadurch gekennzeichnet, dass** die Kulissenführung (73) derart ausgebildet ist, dass der Mitnehmerhebel (72) nach Beendigung der durch die Relativdrehung der Steuerscheibe (71) gegenüber dem Profilkopf (23) bewirkten Aussteuerung der Blockierklinken (25) in Eingriff mit der Innenverzahnung (40) des Antriebsrades (13) abgeschert wird.

15. Gurtaufroller nach einem der Ansprüche 1 bis 3, **dadurch gekennzeichnet, dass** das Ansteuerelement eine an einem in die topfförmige Trägheitsmasse (29) reichenden und mit dem Antriebsrad (13) verbundenen Mitnehmerteil (37) ausschwenkbar gelagerte Kupplungsklinke (41) ist, die in Eingriff mit einer an der Innenseite der topfförmigen Trägheitsmasse (29) ausgebildete Innenverzahnung (36) steuerbar ist.

16. Gurtaufroller nach Anspruch 15, **dadurch gekennzeichnet, dass** die Kupplungsklinke (41) an einer an dem Mitnehmerteil (37) gehalterten Haltefeder (44) schwenkbar gelagert ist.

17. Gurtaufroller nach Anspruch 16, **dadurch gekennzeichnet, dass** die Haltefeder (44) wenigstens einen die Kupplungsklinke (41) in ihrer Ruheposition festlegenden Federarm (45) aufweist.

18. Gurtaufroller nach einem der Ansprüche 1 bis 1, **dadurch gekennzeichnet, dass** das Ansteuerelement aus einem von der Antriebsvorrichtung (51) der Strammvorrichtung zu Beginn von deren Antriebsbewegung in eine an der Innenseite der topfförmigen Trägheitsmasse (29) ausgebildete Innenverzahnung (36) einsteuerbares Kupplungsglied (76) besteht.

19. Gurtaufroller nach Anspruch 18, **dadurch gekennzeichnet, dass** das Kupplungsglied aus einem an dem Antriebsrad (13) unter der Wirkung der Antriebsvorrichtung (51) längsverschiebbar angeordneten Stift (76) besteht, der durch seine Längsverschiebung in Eingriff mit der Innenverzahnung (36) der Trägheitsmasse (29) gelangt.

## Claims

1. A self blocking seat belt retractor with a housing (10) having a blocking device that includes at least one blocking means (25) for the belt shaft (12) that can be controlled in a vehicle sensitive and/or belt sensitive manner into engagement with a toothed gearing system arranged at the housing, and a tightening device operating on the belt shaft (12) comprising a drive wheel (13) that can be set into rotation via a drive device (51), the drive wheel (13) being connectable upon release of the tightening device with the belt shaft (12) whereby the drive wheel (13) of the tightening device is connectable with the belt shaft (12) via the blocking device for the belt shaft (12) for the transmission of force to the belt shaft and the drive wheel (13) is, prior to the release of the tightening device, secured in a force-transmitting manner on the housing (10) of the seat belt retractor **characterized in that** a control element (63, 72, 41, 76) that is released by the tightening device for coupling the blocking means (25) of the blocking device to the drive wheel (13) is provided.

2. A seat belt retractor according to claim 1 **characterized in that** , for a vehicle sensitive control of the blocking device (25), an inertial mass (29) that grips around the blocking device is provided whose relative movement with respect to the rotational movement of the belt shaft (12) controls the blocking means (25) into engagement with the drive wheel (13).

3. A seat belt retractor according to claim 2, **characterized in that** an inertial mass (29) arranged relative to a blocking toothed gearing system (30) with which a sensor lever (31) of a vehicle sensitive sensor (30) can be brought into engagement.

4. A, seat belt retractor according to one of the claims 1 - 3, **characterized in that** the control element is a coupling lever (63) that can be controlled into engagement with the blocking toothed gearing system (30) of the inertial mass (29).

5. A seat belt retractor according to claim 4, **characterized in that** the coupling lever (63) can be controlled, upon release of the tightening device, into engagement with the blocking toothed gearing system (30) of the inertial mass (29) by means of a special lever actuator.

6. A seat belt retractor according to claim 5, **characterized in that** the lever actuator is an actuator (64) operative to move the coupling lever (63).

7. A seat belt retractor according to claim 6, **characterized in that** the actuator (64) is an electro-magnet.

8. A seat belt retractor according to claim 6, **characterized in that** the actuator (64) is an a piezo element.

9. A seat belt retractor according to claim 6, **characterized in that** the actuator (64) is a pyrotechnically driven piston unit (65)

10. A seat belt retractor according to claim 9, **characterized in that**, to actuate the piston unit (65), a special pyrotechnic drive unit (66) is provided.

11. A seat belt retractor according to claim 9, **characterized in that** the piston unit (65) is connected to the pyrotechnic drive unit (68) of the tightening device and is impacted thereby.

12. A seat belt retractor according to claim 1, **characterized in that** the control element is formed as a come along lever (72) mounted on the drive wheel (13) and guided in a constrained manner by a housing piece (70), the come along lever being constrained into engagement with the blocking toothed gearing system (74) of a control plate (71) of the blocking means (25) upon rotation of the drive wheel (13) and thereafter moving out of engagement with the control plate (71) in connection with the blocking of the blocking means (25) with the drive wheel (13) effected via the control plate (71).

13. A seat belt retractor according to claim 12, **characterized in that** the control plate (71) is disposed, on the outer side of a housing cap (70) that grips around the drive wheel (13), on a belt shaft projection (75) of the belt shaft and a guide slot (73) is configured in the housing cap (70) for constrained guiding of the come along lever (72) that extends through the housing cap (70).

14. A seat belt retractor according to claim 13, **characterized in that** the guide slot (73) is configured such that the come along lever (72) is sheared off after the conclusion of the controlled engagement, effected via the relative rotation of the control plate (71) with respect to the profile head (23), of the blocking lever (25) with the inside toothed gearing system (40) of the drive wheel (13).

15. A seat belt retractor according to one of the claims 1 - 3, **characterized in that** the control element is a coupling lever (41) that is rotatably mounted on a come along piece (37) that extends into the pot-shaped inertial mass (29) and is connected with the drive wheel (13), the coupling lever being controllable into engagement with an inner toothed gearing system (36) configured on the inside of the pot-shaped inertial mass (29).

16. A seat belt retractor according to claim 15, **characterized in that** the coupling lever (41) is pivotably disposed on a spring element (44) secured on the come-along piece (37).

17. A seat belt retractor according to claim 16, **characterized in that** the spring element (44) comprises at least one spring arm (45) that secures the coupling lever (41) in its inactive position.

18. A seat belt retractor according to one of the claims 1 - 17, **characterized in that** the control element is a coupling member (76) that is controllable into engagement with an inner toothed gearing system (36) of the pot-shaped inertial mass (29) by the drive device (51) of the tightening device upon the movement of the drive device to begin its rotation.

19. A seat belt retractor according to claim 18, **characterized in that** the coupling member is comprised of a longitudinally displaceable pin (76) arranged on the drive wheel (13) that is longitudinally displaceable by the drive device (51), the pin (76), via its longitudinal displacement, being moved into engagement with the inner toothed gearing system (36) of the inertial mass (29).

## Revendications

1. Enrouleur de ceinture de sécurité autobloquant, comportant un boîtier (10), au moins un dispositif de blocage de l'arbre d'enroulement de la sangle (12), lequel dispositif comporte au moins un moyen de blocage (25), sensible au véhicule et/ou sensible à la sangle et apte à engrener dans une denture de blocage du côté du boîtier, et un tendeur de ceinture agissant sur l'arbre d'enroulement (12) et formé par un pignon d'entraînement (13), qui est destiné à être entraîné en rotation par un dispositif d'entraînement (51) et qui, lors du déclenchement du tendeur de ceinture, peut être couplé à l'arbre d'enroulement (12), le pignon d'entraînement (13) du tendeur de ceinture étant apte à être assemblé, de manière à transmettre les forces, à l'arbre d'enroulement (12) par l'intermédiaire du dispositif de blocage de l'arbre d'enroulement (12) et, avant le déclenchement du tendeur de ceinture, le pignon d'entraînement (13) est fixé contre le boîtier (10) de l'enrouleur de ceinture de manière à transmettre les forces, **caractérisé en ce qu'**il est prévu un élément de commande (63, 72, 41, 76), déclenché par le tendeur de ceinture et destiné à coupler le moyen de blocage (25) du dispositif de blocage de l'arbre d'enroulement (12) avec le pignon d'entraînement (13).

2. Enrouleur de ceinture de sécurité selon la revendication 1, **caractérisé en ce que** pour la commande, sensible à la sangle, du moyen de blocage (25), il est prévu une masse d'inertie (29), qui entoure le dispositif de blocage et dont le mouvement relatif par rapport au mouvement de rotation de l'arbre d'enroulement (12) commande le moyen de blocage (25) en prise avec le pignon d'entraînement (13).

3. Enrouleur de ceinture de sécurité selon la revendication 2, **caractérisé en ce qu'**à la masse d'inertie (29) est associée une denture de blocage (30), par laquelle le levier (31) d'un capteur (30) sensible au véhicule peut être amené en prise.

4. Enrouleur de ceinture de sécurité selon l'une quelconque des revendications 1 à 3, **caractérisé en ce que** l'élément de commande est un cliquet de couplage (63) pouvant être actionné pour s'engager dans la denture de blocage (30) de la masse d'inertie (29).

5. Enrouleur de ceinture de sécurité selon la revendication 4, **caractérisé en ce que**, lors du déclenchement du tendeur de ceinture, le cliquet de couplage (63) peut, par un actionnement séparé du cliquet, être amené en prise avec la denture de blocage (30) de la masse d'inertie (29).

6. Enrouleur de ceinture de sécurité selon la revendication 5, **caractérisé en ce que** l'actionnement du cliquet est réalisé sous la forme d'un actionneur (64) déplaçant le cliquet de couplage (63).

7. Enrouleur de ceinture de sécurité selon la revendication 6, **caractérisé en ce que** l'actionneur (64) est un électroaimant.

8. Enrouleur de ceinture de sécurité selon la revendication 6, **caractérisé en ce que** 1'actionneur (64) est un élément piézoélecrrique.

9. Enrouleur de ceinture de sécurité selon la revendication 6, **caractérisé en ce que** l'actionneur est une unité à piston (65) actionnée par voie pyrotechnique.

10. Enrouleur de ceinture de sécurité selon la revendication 9, **caractérisé en ce que** pour l'actionnement de l'unité à piston (65), il est prévu une unité d'entraînement (66) pyrotechnique séparée, apte à être déclenchée.

11. Enrouleur de ceinture de sécurité selon la revendication 9, **caractérisé en ce que** l'unité à piston (65) est reliée au dispositif d'entraînement (68) pyrotechnique du tendeur de ceinture et peut être sollicitée par celui-ci.

12. Enrouleur de ceinture de sécurité selon la revendication 1, **caractérisé en ce que** l'élément de commande est un levier entraîneur (72), qui est monté sur le pignon d'entraînement (13) et est mobile par guidage forcé par l'intermédiaire d'un élément (70) du boîtier et qui, lors de la rotation du pignon d'entraînement (13), est amené par un guidage forcé en prise avec la denture de blocage (74) d'un disque de commande (71) commandé par inertie pour le moyen de blocage (25) et, à la suite du verrouillage engendré par le disque de verrouillage (71) entre le moyen de blocage (25) et le pignon d'entraînement (13), est amené hors de prise du disque de commande (71).

13. Enrouleur de ceinture de sécurité selon la revendication 12, **caractérisé en ce que** le disque de commande (71), sur le côté extérieur d'une coiffe (70) du boîtier entourant le pignon d'entraînement (13), est monté sur une saillie (75) de l'arbre d'enroulement, et une coulisse de guidage (73) est réalisée dans la coiffe (70) du boîtier pour le guidage forcé du levier entraîneur (72) traversant la coiffe (70) du boîtier.

14. Enrouleur de ceinture de sécurité selon la revendication 13, **caractérisé en ce que** la coulisse de guidage (73) est réalisée de telle sorte que, à la fin de la commande du cliquet de blocage (25) hors de prise sous l'effet de la rotation du disque de commande (71) par rapport à la tête profilée (23), le levier entraîneur (72) est retiré de son engagement dans la denture intérieure (40) du pignon d'entraînement (13).

15. Enrouleur de ceinture de sécurité selon l'une quelconque des revendications 1 à 3, **caractérisé en ce que** l'élément de commande est un cliquet de couplage (41), qui s'étend jusqu'à la masse d'inertie (29) en forme de corps creux et est monté de manière pivotante avec l'élément entraîneur (37) relié au pignon d'entraînement (13) et qui peut être commandé pour engrener dans une denture intérieure (36) réalisée sur la face intérieure de la masse d'inertie (29) en forme de corps creux.

16. Enrouleur de ceinture de sécurité selon la revendication 15, **caractérisé en ce que** le cliquet de couplage (41) est monté de manière pivotante sur un ressort de fixation (44) maintenu contre l'élément entraîneur (37).

17. Enrouleur de ceinture de sécurité selon la revendication 16, **caractérisé en ce que** le ressort de fixation (44) comporte au moins un bras (45) immobilisant le cliquet de couplage (41) dans sa position de repos.

18. Enrouleur de ceinture de sécurité selon l'une quelconque des revendications 1 à 17, **caractérisé en ce que** l'élément de commande est formé par un organe de couplage (76) apte à être commandé par le dispositif d'entraînement (51) du tendeur de ceinture au début du mouvement d'entraînement de celui-ci pour engrener dans une denture intérieure (36) réalisée sur la face intérieure de la masse d'inertie (29) en forme de corps creux.

19. Enrouleur de ceinture de sécurité selon la revendication 18, **caractérisé en ce que** l'organe de couplage est formé par une broche (76), qui est disposée sur le pignon d'entraînement (13) de manière mobile dans le sens longitudinal sous l'action du dispositif d'entraînement (51) et qui, par son déplacement longitudinal, parvient en engrènement avec la denture intérieure (36) de la masse d'inertie (29).
